# EUROPEAN PATENT APPLICATION

(11) **EP 4 148 487 A1**
(43) Date of publication of application: **15.03.2023**
(21) Application number: 21196346.7
(22) Date of filing: 13.09.2021
(51) Int. Cl.: G02F 1/01

(54) **PLASMONIC DEVICE WITH IMPROVED POWER-HANDLING CAPABILITIES**

(71) Applicant: Polariton Technologies AG, 8803 Rüschlikon (CH)
(72) Inventor: Heni, Wolfgang, 8006 Zürich (CH); De Leo, Eva, 8004 Zürich (CH); Habegger, Patrick, 8046 Zürich (CH); Destraz, Marcel, 8048 Zürich (CH)
(74) Representative: Gygi, Andreas

(57) **Abstract**

A plasmonic device (1) comprises: a substrate (2); a plasmonic section (3) which includes at least one confining structure (31, 32) and an optical material (33) for providing a plasmonic waveguide (34); and a heat dissipating section (4) thermally cooperating with the plasmonic waveguide (34) for dissipating heat from the plasmonic waveguide (34).

## Description

### FIELD OF THE INVENTION

The present invention relates to a plasmonic device. More particularly, the present invention relates to a plasmonic device with improved power-handling capabilities. More particularly, the present invention relates to a plasmonic device with improved heat dissipation capabilities.

### BACKGROUND ART

Plasmonics enables to build devices which simultaneously meet the requirement of a compact footprint and high-speed capabilities for generation, detection and manipulation of signals at optical frequencies along metal-dielectric interfaces on the nanometer scale. Plasmonic devices include selected materials and have selected geometries. Plasmonic devices enable to localize and guide light on the nanometer scale, and to offer high-speed behavior.

US2018246350A1 discloses an electro-optic modulator using a graphene-based plasmonic slot, which comprises a substrate layer, a dielectric spacer, a graphene layer, a first metal layer, and a second metal layer. The metal layers create a plasmonic slot that modulates between a light absorptive and a light transparent state depending on the application of voltage across the modulator. Two or four graphene layers may be used to reduce power consumption and the size of the modulator. The plasmonic slot is designed to provide a metal contact, which concurrently serves as an electrical electrode and heat sink at the same time, wherein the metallic plasmonic materials provide a natural heat sink for the device under high-speed operation.

Koch, U., Uhl, C., Hettrich, H. et al., A monolithic bipolar CMOS electronic-plasmonic high-speed transmitter, Nat Electron 3, 338-345 (2020) discloses a monolithic bipolar CMOS (complementary metal-oxide-semiconductor) electronic-plasmonic high-speed transmitter. Advanced bipolar CMOS is combined with silicon plasmonics and addresses key challenges in monolithic integration through co-design of the electronic and plasmonic layers, including thermal design, packaging and a nonlinear organic electro-optical material. Highly temperature stable materials are suggested in order to increase the thermal stability of the modulator.

Heni, Wolfgang Plasmonic-Organic Hybrid Modulators, Doctoral Thesis ETH Zurich (2019), discloses the combination of highly nonlinear organic electro-optic materials with sub-wavelength light confinement offered by plasmonic waveguides which operate extremely energy-efficient at highest speed.

### DISCLOSURE OF THE INVENTION

There may be a need for an improved plasmonic device avoiding some drawbacks of the prior art. More particularly, there may be a need for a plasmonic device having improved reliability, such as short- or long-term reliability. More particularly, there may be a need for a plasmonic device having improved power-handling capabilities. More particularly, there may be a need for a plasmonic device having improved heat dissipation capabilities.

Such a need may be met with the subject-matter of the independent claims. Advantageous embodiments are defined in the dependent claims.

Ideas underlying embodiments of the present invention may be interpreted as being based, inter alia, on the following observations and recognitions.

An aspect of the invention relates to a plasmonic device comprising: a substrate; a plasmonic section which includes at least one confining structure and an optical material for providing a plasmonic waveguide, and a heat dissipation section thermally cooperating with the plasmonic waveguide for dissipating heat from the plasmonic waveguide. The plasmonic device provides phase-modulation of an optical signal. Contrary to modulation by way of absorption, phase-modulation principally does not have power-handling or thermal problems. The at least one confining structure and the optical material provide a plasmonic waveguide which enables guiding an optical signal subject to a plasmonic effect. The heat dissipation section is in particular arranged for thermally cooperating with the plasmonic waveguide and is in particular designed for dissipating heat from the plasmonic waveguide. In some embodiments, the heat dissipation section contacts the plasmonic section.

In some embodiments, the heat dissipation section contacts the plasmonic section, wherein the area of contact between the heat dissipation section and the plasmonic section is at least one fourth of or half of the area of the plasmonic section.

In some embodiments, a first and a second confining structure are arranged and separated by a slot. The first and second confining structures can be arranged in a horizontal or in a vertical direction. The slot between the first and second confining structure is filled with the optical material. The plasmonic waveguide includes the slot filled with the optical material and partially includes the confining structures adjacent to the optical material.

In some embodiments, a first confining structure and a second confining structure are arranged separated by a slot, and the heat dissipation section is arranged less than 10 um (micrometer) apart from the slot, preferably less than 5 um, more preferably less than 2 um.

In some embodiments, the volume of the heat dissipation section is at least one fourth or one half of the volume of the plasmonic section. In some embodiments, the volume of the heat dissipation section is at least twice as large or four times as large as the volume of the plasmonic section and/or the volume of the plasmonic waveguide and/or as the slot as described above.

In some embodiments, the heat dissipation section is designed for enabling a reduction of a temperature in the plasmonic section, in particular of a temperature in the plasmonic waveguide provided by the at least one confining structure and the optical material, of at least 10 K (degree Kelvin).

In some embodiments, the plasmonic section is designed for receiving an optical signal having a power of 10 dBm (Decibel relative to a reference power of 1 mW) and the heat dissipation section is designed for maintaining a temperature in the plasmonic section, in particular of a temperature in the plasmonic waveguide provided by the at least one confining structure and the optical material, of below 363 K (Kelvin) when the plasmonic device is operated at room temperature of about 293 K (Kelvin), preferably of below 343 Kelvin, more preferably of below 323 Kelvin, or even more preferably of below 313 K.

In some embodiments, the heat dissipation section has a thermal conductivity of at least 100 W/m K (Watt per Meter and Kelvin) at 293 K (degree Kelvin), preferably of at least 200 W/m K. In some embodiments, the heat dissipation section has a thermal conductivity which is larger than the thermal conductivity of the substrate, preferably at least twice as large.

According to an embodiment of the invention, for providing the thermal cooperation, the heat dissipation section at least partially contacts the at least one confining structure. Thermal cooperation between the heat dissipation section and the at least one confining structure is improved.

In some embodiments of the invention, for providing the thermal cooperation, the heat dissipation section at least partially contacts the optical material. Thermal cooperation between the heat dissipation section and the optical material is improved.

In some embodiments of the invention, the heat dissipation section is arranged at least partially above the plasmonic section. For example, thermal cooperation between the plasmonic section and the heat dissipation section and dissipation of heat are improved.

In some embodiments of the invention, the heat dissipation section covers the plasmonic section only partially. For example, arranging components relating to the plasmonic section is enabled.

In some embodiments, the heat dissipating section at least partially contacts the at least one confining structure from above and/or from a side and includes an essentially electrically conducting material.

In some embodiments of the invention, the heat dissipation section is arranged at least partially below the plasmonic section. For example, thickness of the heat dissipation section may be increased for improving dissipation of heat.

In some embodiment, the heat dissipation section at least partially contacts the plasmonic section from below and includes an essentially electrically insulating and optically transparent material.

In some embodiments, the heat dissipation section includes a first element which contacts the plasmonic section from below and includes an essentially electrically insulating material, and one or more second elements which contacts the first element from below and includes an electrically conductive or semiconducting material.

In some embodiments of the invention, the heat dissipation section includes a plurality of individual elements. For example, a manufacturing sub process of a standard manufacturing process may enable arranging individual elements at preferred locations.

In some embodiments of the invention, the heat dissipation section at least partially penetrates the substrate. For example, a standard manufacturing process may provide a substrate which includes a heat dissipation section which at least partially penetrates the substrate.

According to some embodiments of the invention, one or more elements of the plasmonic section originate from one or more manufacturing steps which have a higher precision than one or more manufacturing steps for manufacturing one or more elements of the heat dissipation section. For example, a manufacturing process having a higher geometric resolution may be involved for manufacturing the plasmonic section than the precision of the manufacturing process for manufacturing the heat dissipation section, enabling simplified manufacturing of the plasmonic device.

According to some embodiments of the invention, the plasmonic section includes one or more materials having a higher quality than one or more materials of the heat dissipation section. Quality may be defined by properties such as electrical conductivity, plasmonic losses, thermal conductivity, etc. Manufacturing may be simplified by selecting materials of different quality levels for the plasmonic section and the heat dissipation section.

In some embodiments of the invention, the plasmonic section is essentially a horizontal structure, or essentially a vertical structure. The plasmonic device may originate from a manufacturing process enabling a horizontal structure or from a manufacturing process enabling a vertical structure.

In some embodiments of the invention, at least a part of the heat dissipation section covers an area which is smaller than or essentially the same as an area covered by the plasmonic section.

In some embodiments of the invention, at least a part of the heat dissipation section covers an area which is essentially the same as or larger than an area covered by the plasmonic section.

In some embodiments of the invention, the plasmonic section includes a dielectric waveguide for enabling a hybrid-plasmonic mode of operation.

In some embodiments of the invention, further including a cladding for covering at least one or more of the plasmonic section and the heat dissipation section.

In some embodiments of the invention, the heat dissipation section at least partially penetrates the cladding.

In some embodiments, the heat dissipation section may be patterned and/or nanostructured.

### BRIEF DESCRIPTION OF THE DRAWINGS

In the following, advantageous embodiments of the invention will be described with reference to the enclosed drawings. However, neither the drawings nor the description shall be interpreted as limiting the invention.
Figs. 1, 2, 3 show cross-sectional views of embodiments of plasmonic devices according to the prior art;
Figs. 1a, 1b, 1c, 1d, 1e; 2a, 2b; 3a, 3b, 3c show cross-sectional views of embodiments of plasmonic devices according to the present invention with a horizontal plasmonic section and having arranged a heat dissipation section above and/or laterally to the plasmonic section;
Figs. 4, 5, 5a, 6, 7, 8 show cross-sectional views of embodiments of plasmonic devices according to the present invention with a horizontal plasmonic section and having arranged a heat dissipation section below the plasmonic section;
Figs. 9, 10, 11 show cross-sectional views of embodiments of plasmonic devices according to the present invention with a horizontal plasmonic section and having arranged a heat dissipation section above and below the plasmonic section;
Figs. 12a, 12b, 12c, 12d, 12e, 12f, 12g, 12h, 12i show cross-sectional views of embodiments of plasmonic devices according to the present invention with a vertical plasmonic section;
Figs. 13a, 13b, 13c, 13d, 13e, 13f, 13g, 13h show cross-sectional views of embodiments of plasmonic devices according to the present invention with a hybrid-plasmonic section;
Figs. 14a, 14b, 14c, 14d show cross-sectional views of embodiments of plasmonic devices according to the present invention with a plasmonic section which includes a single confining structure.

The figures are only schematic and not to scale. Same reference signs refer to same or similar features.

### MODE(S) FOR CARRYING OUT THE INVENTION

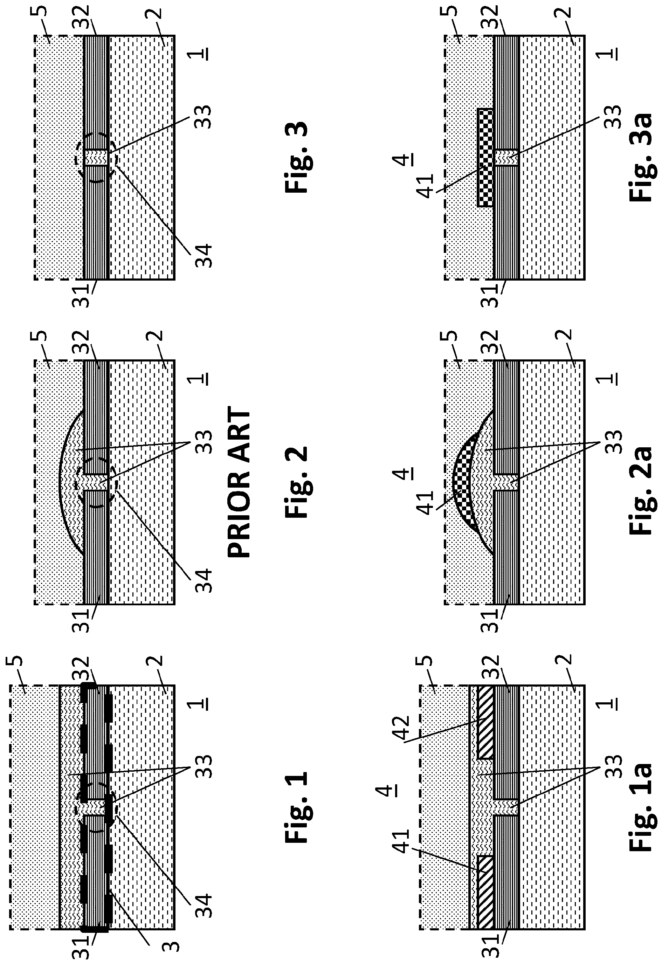

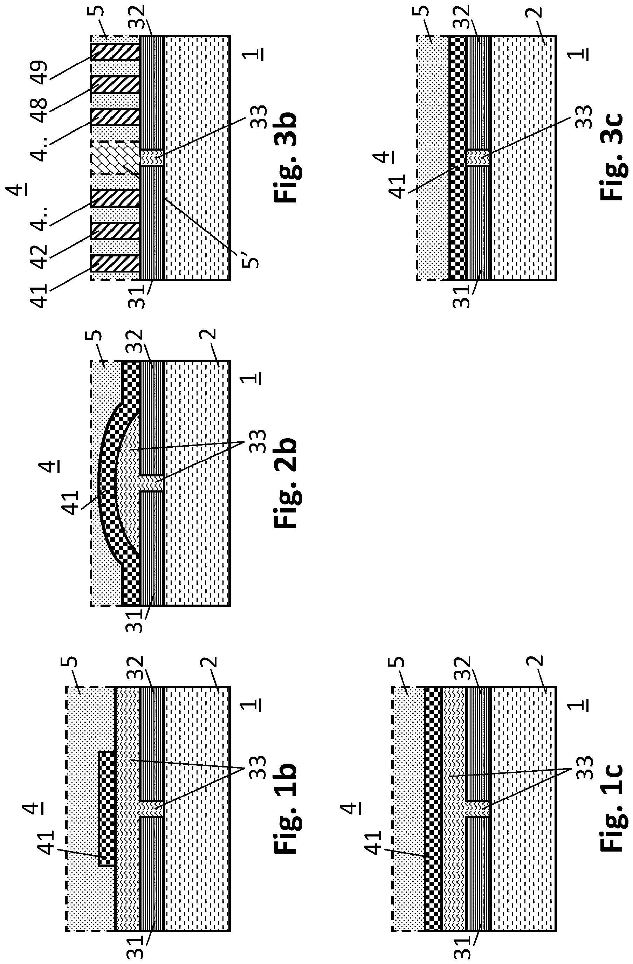

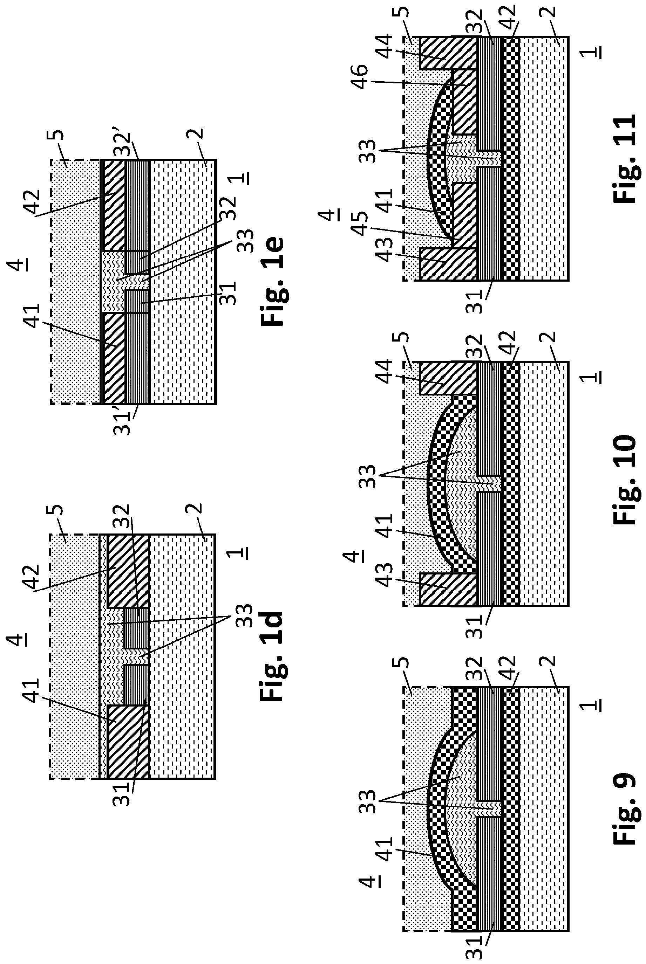

Figs. 1, 2, 3 show cross-sectional views of embodiments of plasmonic devices 1 according to the prior art. A plasmonic section 3 is arranged on a substrate 2. An optional cladding 5 may be arranged above the plasmonic section 3. The plasmonic section 3 includes a first confining structure 31 and a second confining structure 32 arranged on the substrate 2 and arranged with a gap from each other, wherein an optical material 33 is arranged in the gap for providing a plasmonic waveguide 34. Other plasmonic devices according to the prior art, which are not illustrated, may include a plasmonic section 3 wherein the optical material 33 is replaced by air.

In Fig. 1, the plasmonic section 3 is illustrated with a thick dashed rectangle. In most of the remaining Figures, the plasmonic section 3 is not illustrated with a thick dashed rectangle for the purpose of clarity of the Figures.

As illustrated in some drawings, in some embodiments, a first and a second confining structure 31, 32 can be arranged and separated by a slot. The first and second confining structures 31, 32 can be arranged in a horizontal or in a vertical direction. The slot between the first and second confining structure 31, 32 is filled with the optical material 33. The plasmonic waveguide 34 includes the slot filled with the optical material 33 and partially includes the confining structures 31, 32 adjacent to the optical material 33.

Fig. 1 illustrates an embodiment of a plasmonic device 1, wherein the confining structures 31, 32, which are arranged on the substrate 2, and the gap between the confining structures 31, 32 are essentially fully covered by the optical material 33, which essentially has a cross-section of a rectangle, except the part of the optical material 33 arranged in the gap between the confining structures 31, 32, wherein, if applicable, the cladding 5 essentially covers the optical material 33.

Fig. 2 illustrates an embodiment of a plasmonic device 1, wherein the confining structures 31, 32 are only partially covered by the optical material 33, which essentially has a cross-section of a segment of a circle, a segment of an ellipse, a shape of a drop, or any other topography, except the part of the optical material 33 arranged in the gap between the confining structures 31, 32, wherein, if applicable, the cladding 5 covers the confining structures 31, 32 and the optical material 33. In other embodiments not illustrated in Fig. 2, the confining structures 31, 32 are surrounded by the optical material 33. In other embodiments not illustrated in Fig. 2, the optical material 33 covers the confining structures along a length of the plasmonic device 1, i.e. in a direction perpendicular to the sheet illustrating Fig. 2.

Fig. 3 illustrates an embodiment of a plasmonic device 1, wherein the optical material 33 is essentially arranged only in the gap between the confining structures 31, 32, wherein, if applicable, the cladding 5 covers the confining structures 31, 32 and the optical material 33 arranged in the gap between the confining structures 31, 32.

The plasmonic device 1 illustrated in Fig. 1 may be the result from a spin-coating / casting manufacturing process. The plasmonic device 1 illustrated in Fig. 2 may be the result of a manufacturing process which includes a local deposition technique or structuring of the optical material 33. The plasmonic device 1 illustrated in Fig. 3 may be the result of a manufacturing process which includes a local deposition technique or a structuring of the optical material 33 with higher precision compared with Fig. 2.

For example, the substrate 2 may include one or more materials selected from SiO2, Si, Al2O3, MgO, SiN, Ge, insulators, dielectrics, semiconductors, conductors, or any other suitable material.

For example, the confining structures 31, 32 may include one or more materials selected from Au, Ag, Ni, Cu, Al, Ti, or any other suitable metal, a plasmonic material such as Titanium Nitride, highly doped semiconductors, a material with negative real part of the permittivity and a negative imaginary part of the permittivity, an alloy thereof, or any other suitable material. The confining structures 31, 32 may include several layers, for example a first layer including a material such as Ti and having a thickness of about 10 nm (nanometer) or less for providing an undercoating, a second layer including a material such as Au and having a thickness of about 100 nm or more for providing plasmonic features, etc.

For example, the optical material 33, which in some disclosures may be named "active material" or similar, may include one or more materials selected from a nonlinear optical material, in particular featuring a second-order (chi-2) and/or a third- order (chi-3) nonlinearity, such as an organic nonlinear material, for example an OEO material (OEO; organic electro-optic), an organic dye, organic crystals, electro-optic polymers, composite materials, inorganic materials such as Silicon Nitride, Barium Titanate, Lithium Niobate, Indium Phosphite, Silicon, Silicon Oxynitride, Aluminium Nitride, or any other suitable material.

For example, the optical material 33 may include materials featuring optical effects such as plasma-dispersion effects, thermo-optical effects, piezo-optical effects, acousto-optical effects, etc.

For example, the optical material 33 may include liquid crystals, nanoparticles, quantum dots, organic materials, ferroelectric materials, etc.

For example, the cladding 5, which is optional and may therefore relate only to air, may include one or materials selected from SiO2, SiN, SiON, AIN, insulating materials, dielectric materials, epoxy, resin, polymer, organic materials, or any other suitable material.

Embodiments of the plasmonic devices 1 described in this disclosure may have different geometries. The thickness of the substrate 2 may be from 1 to 1000 um (micrometers). The thickness of the confining structures 31, 32 may be from 20 to 500 nm (nanometers), for example 150 nm. The thickness of the optical material 33 may be from 20 to 10'000 nm. The gap between the confining structures 31, 32 may be from 30 to 300 nm, for example 100 nm. The thickness of elements 41, 42, 43, ... of a heat dissipation section 4, which will be described below, may be from 50 to 2'000 nm (nanometers), in particular when arranged above the plasmonic section 3, or from 0.05 to 500 um (micrometers), in particular when arranged below the plasmonic section 3. The thickness of the cladding 5 may be from 100 to 10'000 nm, if applicable.

Embodiments of plasmonic devices 1 described in this disclosure may have different modes of operation. A first mode of operation may relate to the case where a plasmonic wave is guided in the plasmonic waveguide 34 and an electrical signal is applied to the confining structures 31, 32, such as for modifying a transmitted optical signal in accordance with the applied electrical signal, for example for high-speed data transmission, or for example for the reception or sensing of RF or THz fields. A second mode of operation may relate to the case where one or more plasmonic waves are guided in the plasmonic waveguide 34, wherein an electrical signal is neither applied nor received at the confining structures 31, 32, such as for modifying and/or for combining one or more optical signals in accordance with predefined operations, in particular based on second order, third order, or higher order nonlinearities of the optical material 33, for example for up- and down-conversion of optical signals or for wave-mixing processes.

Figs. 1a, 1b, 1c, 1d, 1e; 2a, 2b; 3a, 3b, 3c show cross-sectional views of embodiments of plasmonic devices 1 according to the present invention. Figs. 1a, 1b, 1c, 1d, 1e relate to inventive improvements of the plasmonic device 1 according to Fig. 1. Figs. 2a, 2b relate to inventive improvements of the plasmonic device 1 according to Fig. 2. Figs. 3a, 3b, 3c relate to inventive improvements of the plasmonic device 1 according to Fig. 3.

As illustrated in Figs. 1a, 1b, 1c, 1d, 1e; 2a, 2b; 3a, 3b, 3c, and also illustrated in further Figures described below, according to the invention a heat dissipation section 4 is arranged which thermally cooperates with the plasmonic section 3 for dissipating heat from the plasmonic section 3. The heat dissipation section 4 includes one or more elements 41, 42, 43, ..., which are in particular arranged above and/or below the plasmonic section 3 and which thermally cooperate with the plasmonic section 3 for dissipating heat from the plasmonic section 3.

In some embodiments, elements 41, 42, 43, ... of the heat dissipation section 4 may thermally cooperate among themselves for further improving heat dissipation from the plasmonic section 3.

The heat dissipation section 4 may include elements 41, 42, 43, ... of a first type, which may include one or more materials selected from Al, Au, Ag, Cu, W, Ni, Ti, a metal and/or a semiconductor. Particularly, the elements 41, 42, 43, ... of the first type of the heat dissipation section 4 have a high heat conductivity and may have a high electrical conductivity. In the Figures, the elements 41, 42, 43, ... of the first type are illustrated with a hatching with parallel lines inclined from "top left" to "bottom right".

The heat dissipation section 4 may include elements 41, 42, 43, ... of a second type, which may include one or more materials selected from Al2O3, MgO, ZnO, ZrO2, AIN, SiC, polymers, monomers, composites, organic materials, ceramics and/or dielectrics. Particularly, the elements 41, 42, 43, ... of the second type of the heat dissipation section 4 have a high heat conductivity and a low electrical conductivity respectively are electrical insulators. In the Figures, the elements 41, 42, 43, ... of the second type are illustrated with a pattern fill with small squares.

The heat dissipation section 4 may include elements 41, 42, 43, ... of a third type, which may include one or more materials selected from Si, Ge, III-V materials, and/or other semiconductors. Particularly, the elements 41, 42, 43, ... of the third type of the heat dissipation section 4 have a high heat conductivity and semi-conductive properties. In the Figures, the elements 41, 42, 43, ... of the third type are illustrated with a hatching with parallel lines inclined from "bottom left" to "top right".

Elements 41, 42, 43, ... of the heat dissipation section 4 illustrated in the Figures of a particular type may be replaced or complemented by elements 41, 42, 43, ... of a different type, if applicable, for example if adapted as regards electrical conductivity. For example, Fig. 1a illustrates two elements 41, 42 of a first type, such as Al, which may be replaced by elements 41, 42 of a second type, such as Al2O3, for example, or by a combination of elements 41, 42 of different types. For example, Fig. 3a illustrates a first element 41, which should not be an electrically conductive element depending on the mode of operation.

Elements 41, 42, 43 ... of the heat dissipation section 4 may include several layers. For example, one or more elements 41, 42, 43 ... arranged on a confining structure 31, 32 may include a first layer of a material such as Cr having a thickness of about 100 nm (nanometer), preferably of about 50 nm, more preferably of about 20nm or less for providing an undercoating, a second layer of a material such as Al having a thickness of about 100 nm, preferably of about 500 nm or more for providing heat dissipating features, etc. For example, the heat dissipation section 4 may include more than two layers having more than two different thicknesses. For example, one or more elements 41, 42, 43, ... arranged on the optical material 33 may include a first layer of a material such as ZnO having a thickness of about 50 nm preferably of about 100 nm or more for providing heat dissipation features, a second layer of a material such as Al2O3 having a thickness of about 50 nm, preferably of about 100 nm or more for providing heat dissipation or other features/functions, etc.

Each of the substrate 2, the confining structures 31, 32, the heat dissipation section 4 and/or the cladding 5 may include one or more layers of respective materials or combinations of respective materials. For example, the substrate 2 may relate to a silicon wafer with a SiO2 oxide layer or a SOI wafer (SOI: silicon on insulator). For example, the substrate 2 may include photonic and/or electronic circuits below the plasmonic section 3.

Fig. 1a illustrates a heat dissipation section 4 comprising a first element 41 arranged on top of the first confining structure 31 and a second element 42 arranged on top of the second confining structure 32. Preferably, the elements 41, 42 of the heat dissipation section 4 include a material of the first type, for example Al. For example, the thickness of the first and second confining structure 31, 32 may be 130 nm (nanometers), and the gap between the confining structures 31, 32 may be 100 nm. The thickness of the first and second element 41, 42 may be 500 nm. For example, the thickness of the optical material 33 above the first and second element 41, 42 may be 400 nm. For example, the gap between the first and second confining structure 31, 32 may be 100 nm. For example, the gap between the first and second element 41, 42 may be 1 um (micrometer).

The first and second confining structure 31, 32 may originate from manufacturing steps which have a higher precision than manufacturing steps for manufacturing the elements 41, 42 of the heat dissipation section 4. For example, the manufacturing steps may be adapted to enable a gap of 100 nm (nanometers) between the confining structures 31, 32, and a gap of 1 um (micrometer) between the elements 41, 42.

The first and second confining structure 31, 32 may include materials having a higher quality than materials of the elements 41, 42 of the heat dissipation section. For example, the confining structures 31, 32 may essentially consist of Au of a high purity, and the elements 41, 42 may essentially consist of Al or Au of a lower purity. Furthermore, differentiating between higher quality materials and lower quality materials may be based on parameters relating to roughness, density, etc.

Thus, for manufacturing the confining structures 31, 32 high precision and/or high quality materials such as high quality Au are used, in particular for providing a highly precise gap of for example 100 nm (nanometers) between the confining structures 31, 32 and for enabling low-loss, high-efficient, etc. operation of the plasmonic waveguide 34, while for manufacturing the elements 41, 42 of the heat dissipation section 4 lower precision and lower quality materials such as Al or lower quality Au are sufficient, in particular for providing a sufficiently precise gap of for example 1 um (micrometers) between the elements 41, 42 and for enabling sufficiently high heat conductivity. In other words, the confining structures 31, 32 originate from manufacturing steps and/or materials which are more difficult to control and the elements 41, 42 of the heat dissipation section 4 originate from manufacturing steps and/or materials which are less difficult to control.

The precision of manufacturing steps may relate to a geometrical limit, for example a minimal geometrical resolution between sub-10 nm to 150 nm may be involved, for example of 20 nm, for high precision manufacturing steps, or a minimal geometrical resolution of above 150 nm for low precision manufacturing steps.

In some embodiments, the confining structures 31, 32 and one or more elements 41, 42, ... of the heat dissipation section may originate from manufacturing steps having essentially the same precision and/or may include materials having essentially the same quality.

Fig. 1b illustrates a heat dissipation section 4 comprising a first element 41 arranged on top of the optical material 33, wherein the optical material 33 is only partially covered by the first element 41. Preferably, the first element 41 of the heat dissipation section 4 includes a material of the second type, for example Al2O3. The geometries of the plasmonic device 1 may be similar to the geometries of Fig. 1a. However, for improving thermal cooperation of the heat dissipation section 4 with the plasmonic section 3, the thickness of the optical material 33 may be chosen smaller than in Fig. 1a.

Fig. 1c illustrates a heat dissipation section 4 comprising a first element 41 arranged on top of the optical material 33, wherein the optical material 33 is fully covered by the first element 41. The materials and geometries of the plasmonic device 1 of Fig. 1c may be the same or similar as in Fig. 1b. The complexity of manufacturing steps for arranging the heat dissipation section 4 according to Fig. 1c may be different (i.e. more complex or less complex) from the complexity as in the case of Fig. 1b. The manufacturing process for manufacturing the heat dissipation section 4 according to Fig. 1c may be different from the manufacturing process in case of Fig. 1b (e.g. a printing process). Heat-dissipation in case of Fig. 1c may be improved with respect to Fig. 1b because of a larger area which has a larger heat capacity and because of an improved heat dissipation towards the sides.

Fig. 1d illustrates a heat dissipation section 4 with elements 41, 42 which are arranged on sies of the confining structures 31, 32 facing away from the plasmonic waveguide 34. With respect to Fig. 1a, the width of the confining structures 31, 32 is reduced.

Fig. 1e illustrates a heat dissipation section 4 with elements 41, 42 which are arranged on top of additional confining structures 31', 32', which are arranged on sides of the confining structures 31, 32 facing away from the plasmonic waveguide 34. With respect to Fig. 1a, the width of the confining structures 31, 32 is reduced.

The additional confining structures 31', 32' may serve as structures for providing electrical connectivity with further components.

Fig. 2a illustrates a heat dissipation section 4 comprising a first element 41 arranged on top of the optical material 33, wherein the optical material 33 is only partially covered by the first element 41. Except for a different geometry of the optical material 33 and the first element 41, the materials and geometries of the plasmonic device 1 of Fig. 2a may be the same or similar as in Fig. 1b.

Fig. 2b illustrates a heat dissipation section 4 comprising a first element 41 arranged on top of the optical material 33 and on top of the confining structures 31, 32, wherein the optical material 33 and the confining structures 31, 32 are fully covered by the first element 41. The materials and geometries of the plasmonic device 1 of Fig. 2b may be the same or similar as in Fig. 2a.

Fig. 3a illustrates a heat dissipation section 4 comprising a first element 41 arranged on top of the optical material 33 and on top of the confining structures 31, 32, wherein the optical material 33 is fully covered by the first element 41 and the confining structures 31, 32 are partially covered by the first element 41. Except for a different geometry of the optical material 33 and the first element 41, the materials and geometries of the plasmonic device 1 of Fig. 3a may be the same or similar as in Fig. 2a.

Fig. 3b illustrates a heat dissipating section 4 comprising a plurality of elements 41, 42, ..., 49 arranged on top of the confining structures 31, 32, wherein the elements 41, 42, ..., 49 are separated from each other by a gap. The elements 41, 42, ..., 49 may fully penetrate or may fully extend through the cladding 5, if applicable. At the gap between the confining structures 31, 32, an additional cladding 5' of a different type may be arranged on top of the optical material 33 and partially on top of the confining structures 31, 32, and between a first set of elements 41, 42, ... and a second set of elements ..., 48, 49. The additional cladding 5' may be optional, for example in case the cladding 5 is not air. The elements 41, 42, ..., 49 may originate from a manufacturing process which includes possibilities for providing such elements. The elements 41, 42, ..., 49 of the dissipating section 4 may include a material of the first type, for example Al, Cu, or W. Except for the elements 41, 42, ..., 49 and the additional cladding 5', if applicable, the materials and geometries of the plasmonic device 1 of Fig. 3b may be the same or similar as in Fig. 3a. In some embodiments which are not illustrated in Fig. 3b, the plurality of elements 41, 42, ..., 49 are arranged both on the optical material 33 and on the confining structures 31, 32, e.g. some of the plurality of elements 41, 42, ..., 49 are arranged on the optical material 33 and other of the plurality of elements 41, 42, ..., 49 are arranged on the confining structures 31, 32.

Fig. 3c illustrates a heat dissipation section 4 comprising a first element 41 arranged on top of the confining structures 31, 32 and on top of the optical material 33, wherein the confining structures 31, 32 and the optical material 33 are fully covered by the first element 41. Except for the first element 41, the materials and geometries of the plasmonic device 1 of Fig. 3b may be the same or similar as in Fig. 3a.

In particular the optical material 33 and the heat dissipation section 4 of the plasmonic device 1 illustrated in Fig. 2a, 2b may originate from manufacturing steps which include a local deposition or structuring process for providing the optical material 33, such as an ink-jet printing step.

Figs. 1a, 1b, 1c; 2a, 2b; 3a, 3b, 3c illustrate heat dissipation sections 4 which include elements arranged above the plasmonic section 3.

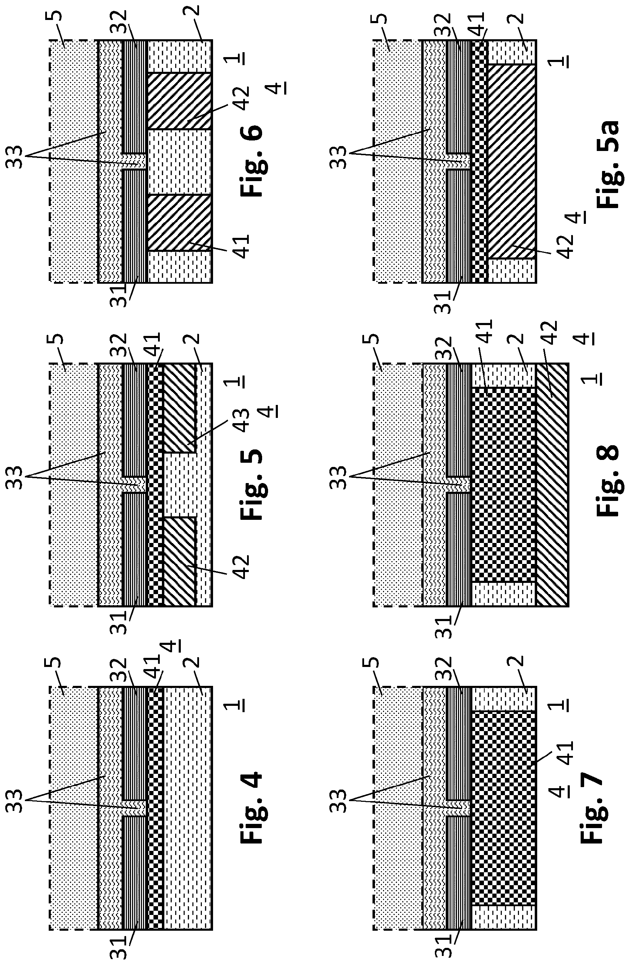

Figs. 4, 5, 5a, 6, 7, 8, which will be further described below, illustrate heat dissipation sections 4 which include elements 41, 42, ... arranged below the plasmonic section 3.

Figs. 9, 10, 11, which will be further described below, illustrate heat dissipation sections 4 which include elements 41, 42, ... arranged above and below the plasmonic section 3.

Fig. 4 illustrates a heat dissipation section 4 comprising a first element 41 arranged at the bottom of the confining structures 31, 32 and at the bottom the optical material 33 arranged in the gap between the confining structures 31, 32. The first element 41 fully covers the bottom of the confining structures 31, 32 and the bottom of the optical material 33. The first element 41 is arranged between the substrate 2 and the plasmonic section 3. Preferably, the first element 41 of the heat dissipation section 4 includes a material of the second type, for example Al2O3. For example, the thickness of the first element 41 may be 100 nm

Fig. 5 illustrates a heat dissipation section 4 comprising a first element 41, a second element 42, and a third element 43. The first element 41 is arranged in accordance or essentially in accordance with Fig. 4. The second element 42 is arranged at the bottom of the first element 41 on the side of the first confining structure 31, and the third element 43 is arranged at the bottom of the first element 41 on the side of the second confining structure 32. Preferably, the second and third elements 42, 43 of the heat dissipation section 4 include a material of the third type, for example Si. For example, the thickness of the second and third element 42, 43 may be about 200 nm (nanometer) or more. In horizontal direction, a gap is left between the second element 42 and the third element 43. For example, the gap may amount to about 1 um (micrometer) or more. For example, the gap between the elements 42, 43 may be larger than a slot between the confining structures 31, 32.

Fig. 5a illustrates a heat dissipation section 4 comprising a first element 41 and a second element 42. The first element 41 is arranged in accordance or essentially in accordance with Fig. 5. At the bottom of the first element 41, the second element 42 is arranged, which may fully penetrate the substrate 2, respectively which may have the same thickness as the substrate 2. The second element 42 may cover an area on the first element 41 which is smaller than or the same as the area covered on the first element 41 by the plasmonic section 3.

Fig. 6 illustrates a heat dissipation section 4 comprising a first element 41 and a second element 42. The first element 41 is arranged at the bottom of the first confining structure 31 and may only partially cover the confining structure 31. The second element 42 is arranged at the bottom of the second confining structure 32 and may only partially cover the confining structure 32. Preferably, the first and second element 41, 42 of the heat dissipation section 4 include a material of the first type, for example Al, Cu or W. The first and second element 41, 42 may fully penetrate or extend fully through the substrate 2, and the thickness of the first and second element 41, 42 may be the same as the thickness of the substrate 2. The first and second element 41, 42 may have the form of vias, wherein the first and second element 41, 42 provide electrical vias to the confining structures 31, 32 which may or may not be operatively used for applying an electrical signal or for detecting an electrical signal.

Fig. 7 illustrates a heat dissipation section 4 comprising a first element 41. Preferably, the first element 41 of the heat dissipation section 4 includes a material of the second type, for example Al2O3. The first element 41 is arranged at the bottom of the plasmonic section 3. For example, the first element 41 may cover an area which is smaller or larger than the plasmonic section 3. The first element 41 may fully penetrate the substrate 2.

Fig. 8 illustrates a heat dissipation section 4 comprising a first and a second element 41, 42. Preferably, the first element 41 of the heat dissipation section 4 includes a material of the second type, for example Al2O3. Preferably, the second element 42 of the heat dissipation section 4 includes a material of the third type, for example Si. The first element 41 may be arranged in accordance with Fig. 7. The second element 42 may have the form of a substrate, for example of a Si substrate.

Fig. 9 illustrates a heat dissipation section 4 comprising a first element 41 in accordance with Fig. 2b above the plasmonic section 3, and a second element 42 in accordance with Fig. 4 below the plasmonic section 3.

Fig. 10 illustrates a heat dissipation section 4 comprising a first and a second element 41, 42 arranged in accordance with Fig. 9. Additionally, on top of the confining structures 31, 32, a third and a fourth element 43, 44 are arranged, preferably including a material of the first type, for example Al.

Fig. 11 illustrates a heat dissipation section 4 comprising a first, second, third and fourth element 41, 42, 43, 44 arranged in accordance with Fig. 10. Additionally, at the top of the confining structures 31, 32 and between the third and fourth element 43, 44, a fifth and sixth element are arranged on top of the confining structures 31, 32, preferably including a material of the first type, for example Al.

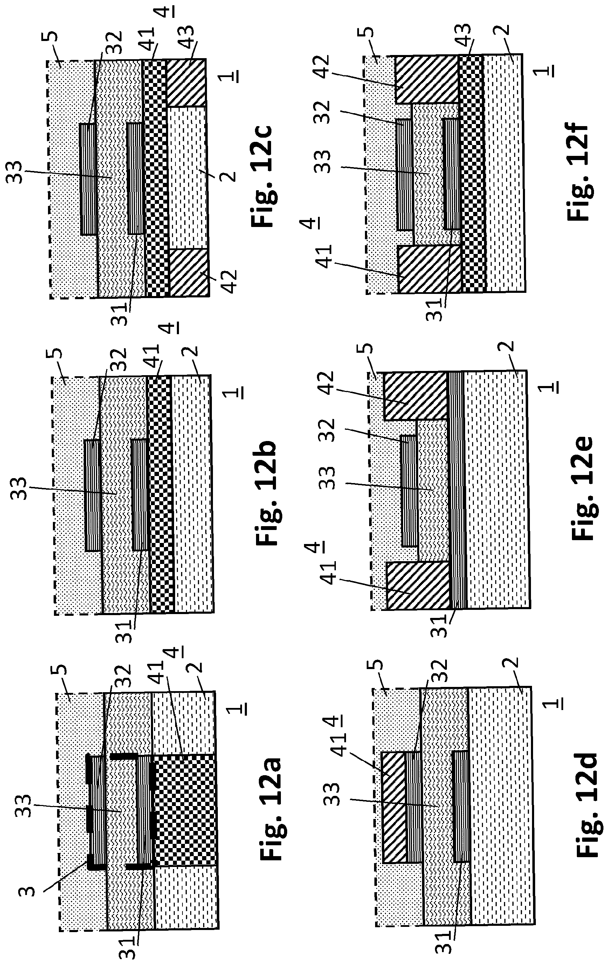

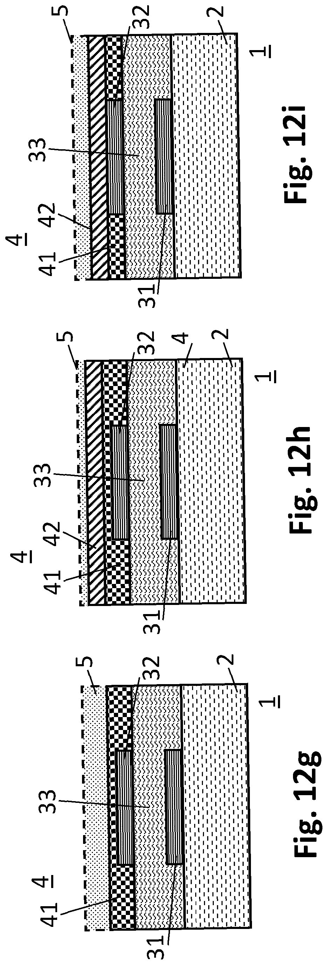

Figs. 12a, 12b, 12c, 12d, 12e, 12f, 12g, 12h, 12i illustrate plasmonic devices 1 having a vertical plasmonic section 3, contrary to the previous Figures illustrating plasmonic devices 1 having a horizontal plasmonic section 3. In Fig 12a, the vertical plasmonic section 3 is illustrated with a thick dashed rectangle. The plasmonic section 3 includes a first and a second confining structure 31, 32. The first confining structure 31 is arranged on the substrate 2. The optical material 33 covers the substrate 2 and the first confining structure 31. The second confining structure 32 is arranged on the optical material 33. On opposite sides of the optical material 33, the first confining structure 31 and the second confining structure 32 cover essentially the same area of the optical material 33.

Fig. 12a illustrates a heat dissipation section 4 comprising a first element 41, which is arranged at the bottom of the first confining structure 31, and which covers the same or essentially the same area as the first confining structure 31, and which may fully penetrate the substrate 2. For example, the first element 41 of the heat dissipation section 4 may include a material of the second type, for example Al2O3. For example, the first element 41 may include a material of the first and/or the third type.

Fig. 12b illustrates a heat dissipation section 4 comprising a first element 41, which is arranged at the bottom of the first confining structure 31, and which covers an area which is larger than the first confining structure 31, and which may have a thickness which is smaller than the thickness of the substrate 2. For example, the first element 41 of the heat dissipation section 4 includes a material of the second type, for example Al2O3. For example, the first element 41 may include a material of the first and/or the third type.

Fig. 12c illustrates a heat dissipation section 4 comprising a first, a second and a third element 41, 42, 43. The first element 41 is essentially arranged in accordance with Fig. 12b. The second and third element 42, 43 are arranged at an edge of the first element 41, and may fully penetrate the substrate 2. Preferably, the second and third element 42, 43 of the heat dissipation section 4 include a material of the first type, for example Al.

Fig. 12d illustrates a heat dissipation section 4 comprising a first element 41, which is arranged on top of the second confining structure 32, and which covers essentially the same area as the second confining structure 32, and which has a thickness which is larger than the thickness of the second confining structure 32. Preferably, the first element 41 of the heat dissipation section 4 includes a material of the first type, for example Al.

Fig. 12e illustrates a first confining structure 31 which covers an area which is larger than the area covered by the second confining structure 32. The heat dissipation section 4 comprises a first and a second element 41, 42, which are arranged at outer edges and on top of the first confining structure 31, and which extend over a level defined by the second confining structure 32, and which are not in contact with the second confining structure 32. For example, the first and second element 41, 42 of the heat dissipation section 4 include a material of the first type, for example Al. For example, the first and/or second element 41, 42 may include a material of the first and/or the third type.

Fig. 12f illustrates a heat dissipation section 4 which includes a first and second element 41, 42 in accordance with Fig. 12e, and a third element in accordance with Fig. 12b.

Fig. 12g illustrates a heat dissipation section 4 which includes a first element 41, which covers the optical material and the second confining structure 32. Preferably, the first element 41 of the heat dissipation section 4 includes a material of the second type, for example Al2O3.

Fig. 12h illustrates a heat dissipation section 4 which includes a first element 41, which covers the optical material 33 and the second confining structure 32.

Preferably, the first element 41 of the heat dissipation section 4 include a material of the second type, for example Al2O3. The heat dissipation includes a second element 42, which covers the first element 41. Preferably, the second element 42 of the heat dissipation section 4 includes a material of the first type, for example Al.

Fig. 12i illustrates a heat dissipation section 4 which includes a first element 41, which covers the optical material 33, and which extends away in horizontal direction at both sides of the second confining structure 32. Preferably, the first element 41 of the heat dissipation section 4 includes a material of the second type, for example Al2O3. The heat dissipation includes a second element 42, which covers the first element 41 and the second confining structure 32. Preferably, the second element 42 of the heat dissipation section 4 includes a material of the first type, for example Al.

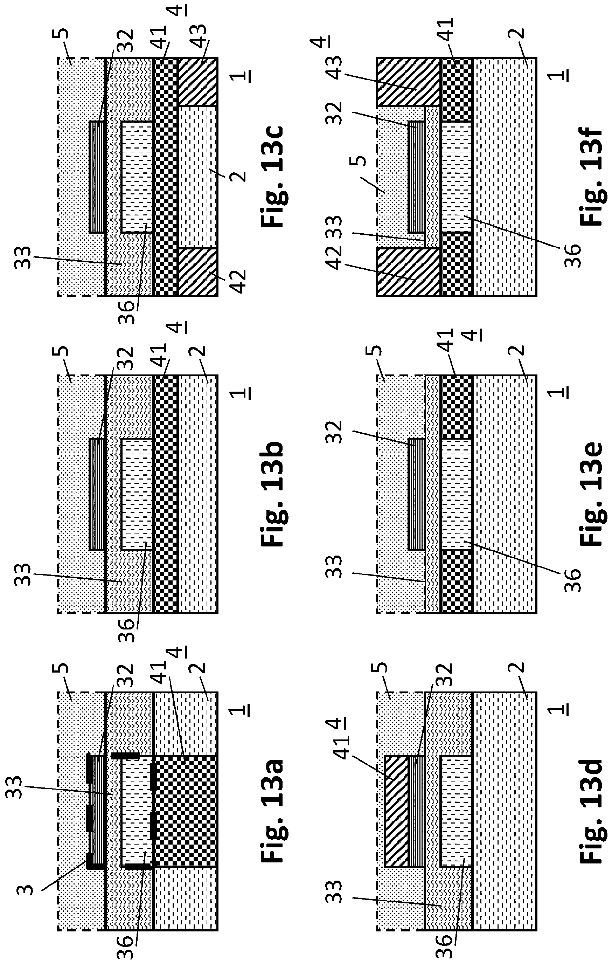

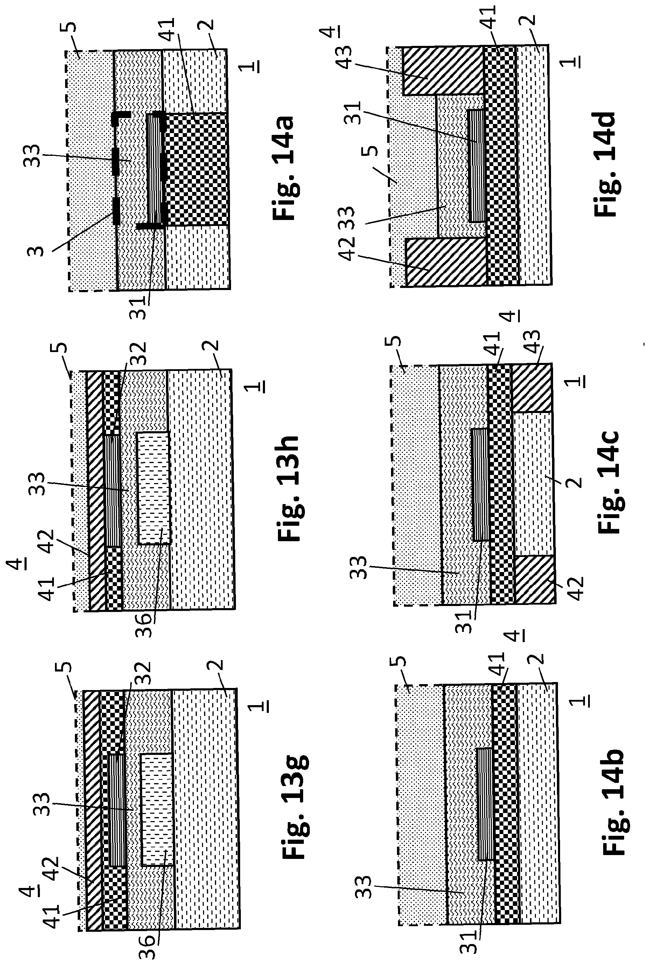

Figs. 13a, 13b, 13c, 13d, 13e, 13f, 13g, 13h illustrate heat dissipation sections 4 of plasmonic devices 1 having a vertical plasmonic section 3, wherein instead of a first confining structure 31, a dielectric waveguide 36 is arranged for enabling a hybrid-plasmonic mode of operation.

Figs. 13a, 13b, 13c, 13d illustrate heat dissipation sections 4 of plasmonic devices 1 having a hybrid-plasmonic mode of operation, wherein the heat dissipation sections 4 correspond respectively to the heat dissipation sections 4 illustrated in Figs. 12a, 12b, 12c, 12d.

Fig. 13e, 13f illustrate plasmonic devices 1 having a hybrid-plasmonic mode of operation which include heat dissipation sections 4 including a first element 41 arranged on top of the substrate 2 and extending away from the dielectric waveguide 36, and having essentially the same thickness as the dielectric waveguide 36. The first element 41 and the dielectric waveguide 36 are covered by the optical material 33.

Preferably, the first element 41 of the heat dissipation section 4 includes a material of the second type, for example Al2O3. The heat dissipation section 4 illustrated in Fig. 13f further includes a second and third element 42, 43, which are arranged on top of the first element 41, and which may have a thickness resulting in a top of the second and third element 42, 43 which is higher than the top of the second confining structure 32. Preferably, the second and third element 42, 43 of the heat dissipation section 4 include a material of the first type, for example Al.

Figs. 13g, 13h illustrate heat dissipation sections 4 of plasmonic devices 1 having a hybrid-plasmonic mode of operation, wherein the heat dissipation sections 4 correspond respectively to the heat dissipation sections 4 illustrated in Figs. 12g, 12h.

Figs. 14a, 14b, 14c, 14d illustrate plasmonic devices 1 having a vertical plasmonic section 3, similar to Figs. 12, 12b, etc. In Fig 14a, the vertical plasmonic section 3 is illustrated with a thick dashed rectangle. The plasmonic section 3 includes a first confining structure 31. The first confining structure 31 is arranged on the substrate 2. The optical material 33 covers the substrate 2 and the first confining structure 31. Thus, the plasmonic section 3 includes only a single confining structure 31.

Figs. 14a, 14b, 14c, 14d illustrate heat dissipation sections 4 of plasmonic devices 1 having a plasmonic section 3 with a single confining structure 31, wherein the heat dissipation sections 4 correspond respectively to the heat dissipation sections 4 illustrated in Figs. 12a, 12b, 12c, 12f.

In the embodiments described above, the substrate 2 may originate from a wafer which includes elements 41, 42, ... of a heat dissipation section 4. Thus, the substrate 2 may include multiple layers and structures, which include the elements 41, 42, ... of the heat dissipation section 4. For example, the plasmonic device 1 illustrated in Fig. 8 may originate from a wafer which includes the second element 42 and the substrate 2, wherein the first element 41 may originate from a processing step applied to the wafer. For example, so called silicon-on-insulator substrates may be employed which include a plurality of layers.

In an embodiment, a first and a second confining structure 31, 32 are arranged in such a way that a slot is formed between the confining structures 31, 32 of a width between 30nm and 200nm. The slot is filled with an optical material 33. The slot filled with the optical material 33 provides a plasmonic waveguide 34. At least two heat-dissipating sections 41, 42 are at least partially contacting the confining structures 31, 32 from a top and/or from a side of the confining structure 31, 32. The at least two heat-dissipating sections 41, 42 are arranged in such a way that a gap is formed between the at least two heat dissipating sections 41, 42 which is wider than the slot between the confining structures 31, 32. The at least two heat dissipating sections 41, 42 are arranged maximally 5 um (micrometer) apart from the slot.

## Claims

1. A plasmonic device (1), comprising:
a substrate (2),
a plasmonic section (3) which includes at least one confining structure (31, 32) and an optical material (33) for providing a plasmonic waveguide (34), and
a heat dissipation section (4) thermally cooperating with the plasmonic waveguide (34) for dissipating heat from the plasmonic waveguide (34).

2. The plasmonic device (1) according to the previous claim, wherein for providing the thermal cooperation the heat dissipation section (4) at least partially contacts the at least one confining structure (31, 32).

3. The plasmonic device (1) according to one of the previous claims, wherein for providing the thermal cooperation the heat dissipation section (4) at least partially contacts the optical material (33).

4. The plasmonic device (1) according to one of the previous claims, wherein the heat dissipation section (4) is arranged at least partially above the plasmonic section (3).

5. The plasmonic device (1) according to one of the previous claims, wherein the heat dissipating section (4) at least partially contacts the at least one confining structure (31, 32) from above and/or from a side and includes an essentially electrically conductive material.

6. The plasmonic device (1) according to one of the previous claims, wherein the heat dissipation section (4) is arranged at least partially below the plasmonic section (3).

7. The plasmonic device (1) according to one of the previous claims, wherein the heat dissipation section (4) at least partially contacts the plasmonic section (3) from below and includes an essentially electrically insulating and optically transparent material.

8. The plasmonic device (1) according to one of the previous claims, wherein the heat dissipation section (4) includes a first element (41) which contacts the plasmonic section (3) from below and includes an essentially electrically insulating and optically transparent material, and one or more second elements (42, 43) which contacts the first element (41) from below and includes an electrically conductive or semiconducting material.

9. The plasmonic device (1) according to one of the previous claims, wherein the heat dissipation section (4) at least partially penetrates the substrate (2).

10. The plasmonic device (1) according to one of the previous claims, wherein one or more elements of the plasmonic section (3) originate from one or more manufacturing steps which have a higher precision than one or more manufacturing steps for manufacturing one or more elements of the heat dissipation section (4).

11. The plasmonic device (1) according to one of the previous claims, wherein the plasmonic section (3) includes one or more materials having a higher quality than one or more materials of the heat dissipation section (4).

12. The plasmonic device (1) according to one of the previous claims, wherein at least a part of the heat dissipation section (4) covers an area which is smaller than or essentially the same as an area covered by the plasmonic section (3).

13. The plasmonic device (1) according to one of the claims 1 to 11, wherein at least a part of the heat dissipation section (4) covers an area which is essentially the same as or larger than an area covered by the plasmonic section (3).

14. The plasmonic device (1) according to one of the previous claims, wherein the plasmonic section (3) includes a dielectric waveguide (36) for enabling a hybrid-plasmonic mode of operation.

15. The plasmonic device (1) according to one of the previous claims, further including a cladding (5) for covering at least one or more of the plasmonic section (3) and the heat dissipation section (4), wherein the heat dissipation section (4) preferably at least partially penetrates the cladding (5).
